# FASCICULE DE BREVET EUROPEEN

(11) **EP 3 108 131 B1**
(45) Date de publication et mention de la délivrance du brevet: **11.09.2019**
(21) Numéro de dépôt: 15709258.6
(22) Date de dépôt: 16.02.2015
(51) Int. Cl.: F02C 7/32, F16H 1/22

(54) **BOÎTIER D'ENTRAINEMENT D'ÉQUIPEMENTS POUR TURBOMACHINE**
VERTEILERGETRIEBE FÜR EINE TURBOMASCHINE
ACCESSORY GEARBOX OF A TURBOMACHINE

(30) Priorité: 18.02.2014 FR 1451271
(43) Date de publication de la demande: 28.12.2016
(73) Titulaire: Safran Transmission Systems, 92700 Colombes (FR)
(72) Inventeur: VIEL, Julien, F-95100 Argenteuil (FR); PRUNERA-USACH, Stéphane, F-92500 Rueil Malmaison (FR); BRANDT, Bernard, F-95150 Taverny (FR); BECQUERELLE, Samuel Raymond Germain, F-78180 Montigny Le Bretonneux (FR)
(74) Mandataire: Cabinet Camus Lebkiri
(86) Numéro de dépôt international: PCT/FR2015/050372
(87) Numéro de publication internationale: WO 2015/124857

(56) Documents cités:
- EP-A2- 2 535 544
- FR-A- 970 075
- FR-A1- 2 290 576
- FR-A1- 2 941 744
- US-A- 2 803 943
- US-A1- 2006 248 900
- US-A1- 2011 289 936
- US-A1- 2014 020 506

## Description

### DOMAINE TECHNIQUE

La présente invention concerne une boite d'entrainement d'équipements pour turbomachine, également appelé boitier d'engrenage pour accessoires ou AGB pour « accessory gear box ». Une telle boite d'entraînement d'accessoires est destinée à transmettre le mouvement originaire de la turbomachine par l'intermédiaire d'un arbre radial sortant de celle-ci, et à le transmettre à divers accessoires ou équipements annexes à la turbomachine, tels que des pompes, des générateurs d'électricité, etc., qui sont indispensables au fonctionnement de la turbomachine ou à d'autres appareils d'un aéronef propulsé par cette turbomachine. La boite d'entraînement d'équipement permet également de transmettre la puissance des équipements vers le moteur lors des phases de démarrage. La transmission s'effectue par une chaine cinématique composée d'engrenages successifs.

### ETAT DE LA TECHNIQUE ANTERIEUR

Le document FR2995053 décrit une boite d'engrenages à fixer sur une turbomachine pour entraîner au moins un équipement annexe à la turbomachine.

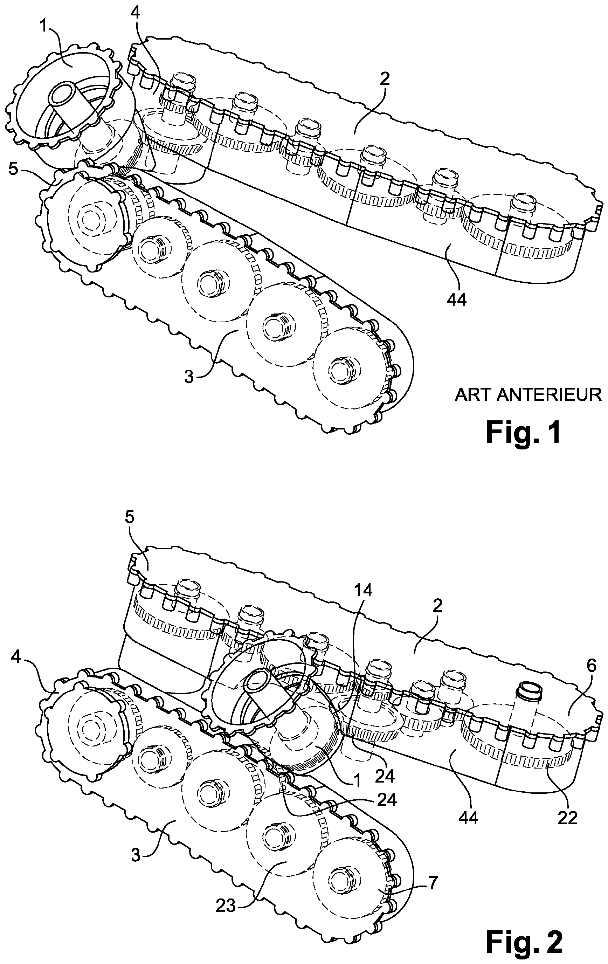

Cette boite d'engrenages est représentée plus précisément sur la figure 1. Elle comporte :
- un organe de prise de mouvement 1 destiné à engrener avec un arbre radial de la turbomachine,
- un carter 44 ;
- deux chaînes cinématiques 2, 3 internes au carter. Chaque chaîne cinématique 2, 3 est composée d'engrenages reliés les uns aux autres. Chaque engrenage permet d'entraîner en rotation un arbre rotatif d'un équipement. Les deux chaines cinématiques 2, 3 sont situées dans des plans non parallèles. L'organe de prise de mouvement 1 est relié à chaque chaîne cinématique au niveau d'une des extrémités 4, 5 de ladite chaîne cinématique.

Le document FR3011882 décrit un autre type de boite d'engrenages à fixer sur une turbomachine pour entraîner au moins un équipement annexe à la turbomachine.

Cette boite d'engrenage comporte :
- un organe de prise de mouvement destiné à engrener avec un arbre radial de la turbomachine,
- un carter,
- une chaîne cinématique interne au carter. La chaine cinématique comporte un arbre central qui transmet le mouvement de l'organe de prise de mouvement à au moins un pignon apte à entraîner en rotation au moins un arbre rotatif d'un équipement. L'organe de prise de mouvement est relié à l'arbre central au niveau d'une des extrémités de l'arbre central.

Toutefois, dans ces deux documents, la prise de mouvement est contrainte et elle ne peut pas être effectuée sur l'ensemble des arbres de la turbomachine.

### EXPOSE DE L'INVENTION

L'invention vise à remédier aux inconvénients de l'état de la technique en proposant une boite d'engrenages à fixer sur une turbomachine pour entraîner au moins un équipement annexe à la turbomachine qui offre une plus grande latitude pour réaliser la prise de mouvement, en permettant notamment de réaliser la prise de mouvement sur l'arbre haute pression d'une turbomachine, sur son arbre basse pression ou sur son arbre intermédiaire.

Pour ce faire, est proposé selon un premier aspect de l'invention, une boite d'engrenages à fixer sur une turbomachine, dite « boite d'engrange en colonne », pour entraîner au moins un équipement annexe à la turbomachine selon les caractéristiques de la revendication 1.

Ainsi, l'invention propose de relier l'organe de prise de mouvement à la chaîne cinématique non plus au niveau d'une extrémité de la chaîne cinématique mais au niveau d'un point strictement compris entre les deux extrémités de la chaîne cinématique. Le fait de délocaliser l'organe de prise de mouvement à l'intérieur de la chaîne cinématique permet d'avoir un plus grand degré de latitude pour réaliser la prise de mouvement sur un arbre de la turbomachine et donc d'avoir des latitudes d'installation de la boite d'engrenage. On pourra ainsi notamment réaliser la prise de mouvement avion non plus dans la zone du carter intercompresseur mais sur une localisation autre des arbres moteurs, comme par exemple sur l'arbre intermédiaire, ou entre la turbine et la chambre de combustion, ou encore entre le compresseur et la turbine.

Ainsi, le mouvement de l'organe de prise de mouvement est transmis à l'arbre rotatif de l'équipement par l'intermédiaire d'un arbre central, ce qui permet un gain de place et une plus grande latitude dans l'agencement de la boite d'engrenage.

Avantageusement, l'organe de prise de mouvement s'étend suivant une direction sécante à celle de l'arbre central.

Le fait de délocaliser l'organe de prise de mouvement permet dans ce cas de décomposer l'arbre central en deux parties qui sont reliées indépendamment l'une de l'autre à l'arbre central.

Avantageusement, le premier engrenage à axes concourants présente de préférence un rapport de réduction différent de celui du deuxième engrenage à axes concourants de sorte que les deux parties de l'arbre central peuvent ainsi tourner à des vitesses différentes. On peut ainsi relier les équipements lents à une des deux parties de l'arbre central, tandis que les équipements rapides sont reliés à l'autre partie de l'arbre central, ce qui permet d'optimiser la chaîne cinématique.

Selon un deuxième aspect de l'invention, l'invention a pour objet une boite d'engrenages à fixer sur une turbomachine, « boite d'engrenage en V », pour entraîner au moins un équipement annexe à la turbomachine selon les caractéristiques de la revendication 3.

Avantageusement, chaque chaine cinématique comporte une ligne d'engrenages, les deux lignes d'engrenages s'étendant suivant des directions sécantes.

Selon différents modes de réalisation, les deux engrenages à axes concourants peuvent présenter des rapports de réduction différents ou égaux.

Un troisième aspect de l'invention concerne une turbomachine comportant une boite d'engrenage selon l'invention.

Selon différents modes de réalisation :
- la turbomachine comporte un arbre haute pression, l'organe de prise de mouvement étant relié à l'arbre haute pression ;
- la turbomachine comporte un arbre basse pression, l'organe de prise de mouvement étant relié à l'arbre basse pression ;
- la turbomachine comporte un arbre intermédiaire, l'organe de prise de mouvement étant relié à l'arbre intermédiaire.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une représentation schématique en perspective d'une boite d'engrenage de l'art antérieur ;
- La figure 2, une représentation schématique en perspective d'une boite d'engrenage selon un premier mode de réalisation de l'invention ;
- La figure 3, une représentation schématique en perspective d'une boite d'engrenage selon un deuxième mode de réalisation de l'invention ;
- La figure 4, une représentation schématique en perspective d'une boite d'engrenage selon un autre mode de réalisation de l'invention.

Pour plus de clarté, les éléments identiques ou similaires sont repérés par des signes de références identiques sur l'ensemble des figures.

### DESCRIPTION DETAILLEE D'AU MOINS UN MODE DE REALISATION

La figure 2 représente une boite d'engrenages selon un mode de réalisation de l'invention dit « boite à engrenage en V ». Cette boite d'engrenage comporte :
- Un carter 44;
- Un organe de prise de mouvement 1 ;
- Une première et une deuxième chaîne cinématique 2, 3. Chaque chaîne cinématique 2, 3 comporte une ligne d'engrenages intermédiaires 22, 23. Chaque engrenage intermédiaire 22, 23 est de préférence apte à entraîner en rotation un arbre rotatif d'un équipement. Chaque chaîne cinématique 2, 3 comporte une première extrémité 4, 5 et une deuxième extrémité 6, 7.

Au contraire des boites d'engrenages de l'art antérieur dans lesquelles l'organe de prise de mouvement 1 est relié à chaque chaîne cinématique au niveau d'une de ces extrémités, dans ce mode de réalisation, l'organe de prise de mouvement 1 est relié à chaque chaîne cinématique 2, 3 au niveau d'une zone 14 située à l'intérieur de cette chaîne cinématique. En d'autres termes, la zone 14 est strictement située entre les deux extrémités 4, 6 et 5, 7 de chaque chaîne cinématique 2, 3. Plus précisément, l'organe de prise de mouvement 1 est de préférence relié à chaque chaîne cinématique au niveau d'un de ces engrenages intermédiaires 22, 23 qui est intercalé entre deux engrenages intermédiaires de la chaîne cinématique . La localisation de l'organe de prise de mouvement 1 peut ainsi être choisie en fonction de l'arbre radial de la turbomachine à laquelle il est relié.

L'organe de prise de mouvement 1 est de préférence relié à chaque chaîne cinématique par un engrenage à axes concourants 24. Selon un mode de réalisation, l'engrenage à axes concourants 24 reliant l'organe de prise de mouvement 1 à la première chaîne cinématique 2 peut présenter un rapport de réduction différent de celui qui relie l'organe de prise de mouvement 1 à la deuxième chaîne cinématique 3. Ainsi, les équipements lents peuvent être reliés à une des deux chaînes cinématiques, tandis que les équipements rapides sont reliés à l'autre.

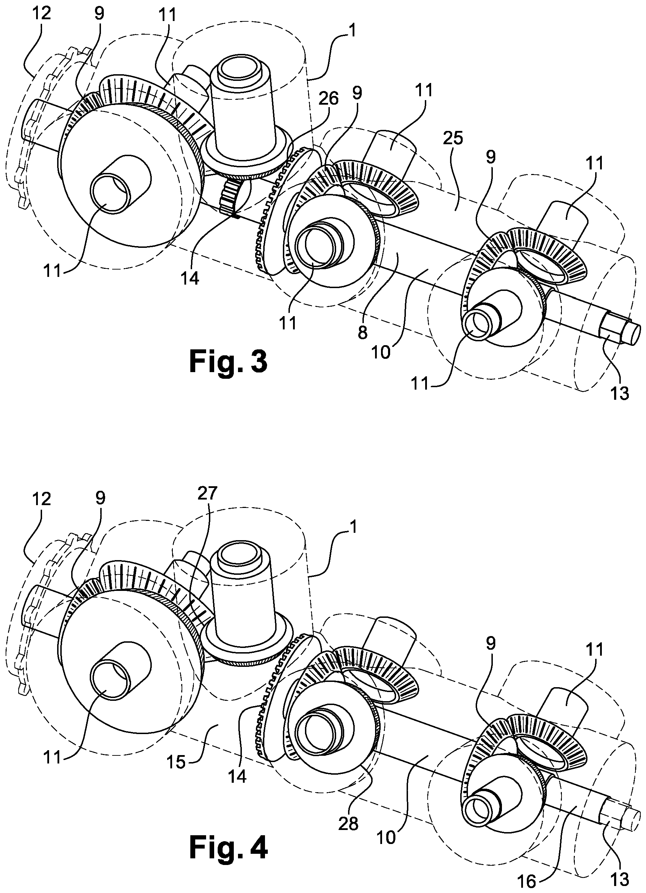

La figure 3 représente une boite à engrenage selon un autre mode de réalisation de l'invention dit « boite à engrenage en colonne ».

Dans ce mode de réalisation la boite d'engrenage comporte :
- Un carter 25 ;
- Un organe de prise de mouvement 1 ;
- Une chaîne cinématique 8.

La chaîne cinématique 8 comporte un arbre central 10 relié à des engrenages intermédiaires 9, chaque engrenage intermédiaire 9 étant lui-même relié à un arbre rotatif 11 d'un équipement. L'arbre central comporte deux extrémités 12, 13. L'arbre central 10 est relié à l'organe de prise de mouvement 1 par un engrenage à axes concourants 26. Ainsi, l'organe de prise de mouvement 1 transmet son mouvement de rotation à l'arbre central 10 par l'intermédiaire de l'engrenage à axes concourants 26. L'arbre central 10 transmet son mouvement de rotation aux arbres rotatifs 11 par l'intermédiaire des engrenages intermédiaires 9. Selon un mode de réalisation, on peut également utiliser le même pour réaliser la prise de mouvement et la transmission à des pignons équipements. Dans ce cas, l'engrenage à axes concourants 26 et l'engrenage intermédiaire 9 sont un seul et même engrenage.

La boite d'engrenages selon ce mode de réalisation est particulièrement remarquable en ce que l'organe de prise de mouvement 1 n'est plus relié à une extrémité 12 de l'arbre central 10 contrairement aux modes de réalisation de l'art antérieur, mais il est relié à l'arbre central 10 au niveau d'une zone située entre les deux extrémités 12, 13 de l'arbre central. Plus précisément, l'organe de prise de mouvement 1 est de préférence relié à l'arbre central 10 au niveau d'une zone 14 située entre deux engrenages intermédiaires 9.

En référence à la figure 4, l'arbre central 10 peut également être composé de deux parties 15, 16 reliée indépendamment l'une de l'autre à l'organe de prise de mouvement 1, la première partie 15 de l'arbre central 10 étant relié à l'organe de prise de mouvement 1 par un premier engrenage à axes concourants 27, la deuxième partie 16 de l'arbre central 10 étant relié à l'organe de prise de mouvement 1 par un second engrenage à axes concourants 28. Les deux parties 15, 16 sont de préférence alignées. Le premier engrenage à axes concourants 27 peut présenter un rapport de réduction différent de celui du deuxième engrenage à axes concourants 28 de sorte que la première partie 15 de l'arbre centrale 10 tourne à une vitesse différente de la deuxième partie 16. On peut ainsi relier les équipements lents à une des deux parties 15, 16, tandis que les équipements rapides sont reliés à l'autre partie.

Naturellement, l'invention n'est pas limitée aux modes de réalisation décrits en référence aux figures et des variantes pourraient être envisagées sans sortir du cadre de l'invention.

## Revendications

1. Boite d'engrenages à fixer sur une turbomachine pour entraîner au moins un équipement annexe à la turbomachine, la boite d'engrenages comportant :
- un carter ;
- un organe de prise de mouvement (1) apte à engrener avec un arbre radial de la turbomachine;
- au moins une chaîne cinématique (2, 3, 8) interne au carter apte à transmettre le mouvement de rotation de l'organe de prise de mouvement (1) à au moins un arbre rotatif d'un équipement, la chaîne cinématique (2, 3, 8) comportant une première extrémité (4, 5, 12) et une deuxième extrémité (6, 7, 13),
**caractérisée en ce que** l'organe de prise de mouvement (1) est relié à la chaîne cinématique (2, 3, 8) par un engrenage à axes concourants situé à l'intérieur de la chaîne cinématique (2, 3, 8) ;
dans laquelle la chaîne cinématique (8) comporte au moins un arbre central (10) apte à transmettre le mouvement de l'organe de prise de mouvement (1) à au moins un arbre rotatif (11) d'un équipement par l'intermédiaire d'au moins un engrenage intermédiaire (9), l'arbre central (10) comportant deux extrémités (12, 13), l'organe de prise de mouvement (1) étant relié à l'arbre central (10) par un engrenage à axes concourants situé entre la première extrémité (12) et la deuxième extrémité (13) de l'arbre central (10), ledit arbre central (10) comportant une première (15) et une deuxième partie (16), l'organe de prise de mouvement (1) étant relié à la première partie (15) par un premier engrenage à axes concourants et à la deuxième partie (16) par un deuxième engrenage à axes concourants.

2. Boite d'engrenage selon la revendication précédente, dans laquelle le premier engrenage à axes concourants présente un rapport de réduction différent de celui du deuxième engrenage à axes concourants.

3. Boite d'engrenages à fixer sur une turbomachine pour entraîner au moins un équipement annexe à la turbomachine, la boite d'engrenages comportant :
- un carter ;
- un organe de prise de mouvement (1) apte à engrener avec un arbre radial de la turbomachine;
- au moins une chaîne cinématique (2, 3, 8) interne au carter apte à transmettre le mouvement de rotation de l'organe de prise de mouvement (1) à au moins un arbre rotatif d'un équipement, la chaîne cinématique (2, 3, 8) comportant une première extrémité (4, 5, 12) et une deuxième extrémité (6, 7, 13),
**caractérisée en ce que** l'organe de prise de mouvement (1) est relié à la chaîne cinématique (2, 3, 8) par un engrenage à axes concourants situé à l'intérieur de la chaîne cinématique (2, 3, 8), ladite boite d'engrenages comportant deux chaînes cinématiques (2, 3), chaque chaîne cinématique (2, 3) étant apte à transmettre le mouvement de rotation de l'organe de prise de mouvement (1) à au moins un arbre rotatif d'un équipement, chaque chaîne cinématique (2, 3) comportant une première extrémité (4, 5) et une deuxième extrémité (6, 7), l'organe de prise de mouvement (1) étant relié à chaque chaîne cinématique (2, 3) par un engrenage à axes concourants situé entre la première (4, 5) et la deuxième extrémité (6, 7) de chaque chaîne cinématique (2, 3).

4. Boite à engrenages selon la revendication précédente, dans laquelle les deux engrenages à axes concourants présentent des rapports de réduction différents.

5. Turbomachine comportant une boite d'engrenages selon l'une des revendications précédentes.

6. Turbomachine selon la revendication 5, dans laquelle la turbomachine comporte un arbre haute pression, l'organe de prise de mouvement étant relié à l'arbre haute pression.

7. Turbomachine selon la revendication 5, comportant en outre un arbre basse pression, l'organe de prise de mouvement étant relié à l'arbre basse pression.

8. Turbomachine selon la revendication 5, comportant en outre un arbre intermédiaire, l'organe de prise de mouvement étant relié à l'arbre intermédiaire.

## Patentansprüche

1. Zahnradschutzkasten, der auf einer Turbomaschine zu befestigen ist, um mindestens eine Zusatzeinrichtung der Turbomaschine anzutreiben, wobei der Zahnradschutzkasten umfasst:
- ein Gehäuse;
- ein Abtriebsglied (1) zum Verzahnen mit einer Radialwelle der Turbomaschine;
- mindestens eine Bewegungsübertragungskette (2, 3, 8) im Gehäuse zur Übertragung der Rotationsbewegung des Abtriebsglieds (1) auf mindestens eine drehbare Welle einer Vorrichtung, wobei die Bewegungsübertragungskette (2, 3, 8) ein erstes Ende (4, 5, 12) und ein zweites Ende (6, 7, 13) aufweist,
**dadurch gekennzeichnet, dass** das Abtriebsglied (1) mit der Bewegungsübertragungskette (2, 3, 8) über ein Zahnradgetriebe mit zusammenwirkenden Wellen innerhalb der Bewegungsübertragungskette (2, 3, 8) verbunden ist;
wobei die Bewegungsübertragungskette (8) mindestens eine zentrale Welle (10) zur Übertragung der Bewegung des Abtriebsglieds (1) auf mindestens eine drehbare Welle (11) einer Vorrichtung über mindestens ein Zwischenzahnrad (9) umfasst, wobei die zentrale Welle (10) zwei Enden (12, 13) aufweist, wobei das Abtriebsglied (1) mit der zentralen Welle (10) über ein Zahnradgetriebe mit zusammenwirkenden Wellen zwischen dem ersten Ende (12) und dem zweiten Ende (13) der zentralen Welle (10) verbunden ist, wobei diese zentrale Welle (10) einen ersten Teil (15) und einen zweiten Teil (16) besitzt, wobei das Abtriebsglied (1) mit dem ersten Teil (15) über ein ersten Zahnradgetriebe mit zusammenwirkenden Wellen und mit dem zweiten Teil (16) über ein zweites Zahnradgetriebe mit zusammenwirkenden Wellen verbunden ist.

2. Zahnradschutzkasten nach vorstehendem Anspruch, bei dem das erste Zahnradgetriebe mit zusammenwirkenden Wellen ein anderes Untersetzungsverhältnis als das zweite Zahnradgetriebe mit zusammenwirkenden Wellen aufweist.

3. Zahnradschutzkasten, der auf einer Turbomaschine zu befestigen ist, um mindestens eine Zusatzeinrichtung der Turbomaschine anzutreiben, wobei der Zahnradschutzkasten umfasst:
- ein Gehäuse;
- ein Abtriebsglied (1) zur Verzahnung mit einer Radialwelle der Turbomaschine;
- mindestens eine Bewegungsübertragungskette (2, 3, 8) im Gehäuse zur Übertragung der Rotationsbewegung des Abtriebsglieds (1) auf mindestens eine drehbare Welle einer Vorrichtung, wobei die Bewegungsübertragungskette (2, 3, 8) ein erstes Ende (4, 5, 12) und ein zweites Ende (6, 7, 13) aufweist,
**dadurch gekennzeichnet, dass** das Abtriebsglied (1) mit der Bewegungsübertragungskette (2, 3, 8) über ein Zahnradgetriebe mit zusammenwirkenden Wellen innerhalb der Bewegungsübertragungskette (2, 3, 8) verbunden ist,
wobei der Zahnradschutzkasten zwei Bewegungsübertragungsketten (2, 3) umfasst, wobei jede Bewegungsübertragungskette (2, 3) in der Lage ist, die Rotationsbewegung des Abtriebsglieds (1) auf mindestens eine drehbare Welle einer Vorrichtung zu übertragen, wobei jede Bewegungsübertragungskette (2, 3) ein erstes Ende (4, 5) und ein zweites Ende (6, 7) aufweist, wobei das Abtriebsglied (1) mit jeder Bewegungsübertragungskette (2, 3) über ein Zahnradgetriebe mit zusammenwirkenden Wellen zwischen dem ersten Ende (4, 5) und dem zweiten Ende (6, 7) jeder Bewegungsübertragungskette (2, 3) verbunden ist.

4. Zahnradschutzkasten nach vorstehendem Anspruch, bei dem beide Zahnradgetriebe mit zusammenwirkenden Wellen unterschiedliche Untersetzungsverhältnisse aufweisen.

5. Turbomaschine mit einem Zahnradschutzkasten nach einem der vorstehenden Ansprüche.

6. Turbomaschine nach Anspruch 5, bei dem die Turbomaschine eine Hochdruckwelle aufweist, wobei das Abtriebsglied mit der Hochdruckwelle verbunden ist.

7. Turbomaschine nach Anspruch 5, die zusätzlich eine Niederdruckwelle aufweist, wobei das Abtriebsglied mit der Niederdruckwelle verbunden ist.

8. Turbomaschine nach Anspruch 5, die zusätzlich eine Zwischenwelle aufweist, wobei das Abtriebsglied mit der Zwischenwelle verbunden ist.

## Claims

1. Gearbox to be fixed to a turbine engine in order to drive at least one apparatus annexed to the turbine engine, where the gearbox comprises:
- a housing;
- a power take-off member (1) capable of engaging with a radial shaft of the turbine engine;
- at least one kinetic chain (2, 3, 8) located inside the housing and capable of transmitting the rotational movement of the power take-off (1) to at least one rotatable shaft of an apparatus, the kinematic chain (2, 3, 8) comprising a first end (4, 5, 12) and a second end (6, 7, 13),
**characterised in that** the power take-off member (1) is linked to the kinematic chain (2, 3, 8) by a gear having convergent axes located within the kinematic chain (2, 3, 8),
wherein the kinematic chain (8) comprises at least one central shaft (10) capable of transmitting the movement of the power take-off member (1) to at least one rotatable shaft (11) of an apparatus through at least one intermediate gear (9), where the central shaft (10) comprises two ends (12,13), the power take-off member (1) being linked to the central shaft (10) by a gear having convergent axes, located between the first end (12) and the second end (13) of the central shaft (10), said central shaft (10) comprising a first (15) and second part (16), with the power take-off member (1) being linked to the first part (15) by a first gear with convergent axes and to the second part (16) by a second gear with convergent axes

2. Gearbox according to the preceding claim, wherein the first gear having convergent axes exhibits a reduction ratio which is different to that of the second gear having convergent axes.

3. Gearbox to be fixed to a turbine engine in order to drive at least one apparatus annexed to the turbine engine, where the gearbox comprises:
- a housing;
- a power take-off member (1) capable of engaging with a radial shaft of the turbine engine;
- at least one kinetic chain (2, 3, 8) located inside the housing and capable of transmitting the rotational movement of the power take-off (1) to at least one rotatable shaft of an apparatus, the kinematic chain (2, 3, 8) comprising a first end (4, 5, 12) and a second end (6, 7, 13),
**characterised in that** the power take-off member (1) is linked to the kinematic chain (2, 3, 8) by a gear having convergent axes located within the kinematic chain (2, 3, 8),
said gearbox comprising two kinematic chains (2, 3), each kinematic chain (2, 3) being capable of transmitting the rotation movement of the power take-off member (1) to at least one rotatable shaft of an apparatus, each kinematic chain (2, 3) comprising a first end (4, 5) and a second end (6, 7), the power take-off member (1) being linked to each kinematic chain (2, 3) by a gear having convergent axes located between the first (4, 5) and the second (6, 7) end of each kinematic chain (2, 3).

4. Gearbox according to the preceding claim, wherein the two gears having convergent axes exhibit different reduction ratios.

5. Turbine engine comprising a gearbox according to one of the preceding claims.

6. Turbine engine according to claim 5, wherein the turbine engine comprises a high-pressure shaft, with the power take-off member being linked to the high-pressure shaft.

7. Turbine engine according to claim 5, furthermore comprising a low-pressure shaft, with the power take-off member being linked to the low-pressure shaft.

8. Turbine engine according to claim 5, furthermore comprising an intermediate shaft, with the power take-off member being linked to the intermediate shaft.
